# EUROPEAN PATENT APPLICATION

(11) **EP 3 301 887 A1**
(43) Date of publication of application: **04.04.2018**
(21) Application number: 16306244.1
(22) Date of filing: 28.09.2016
(51) Int. Cl.: H04M 1/2745

(54) **METHOD AND APPARATUS FOR BUILDING FAVORITE TELEPHONE LIST FOR MULTIPLE DEVICES**

(71) Applicant: Thomson Licensing, 92130 Issy-les-Moulineaux (FR)
(72) Inventor: LOEFFLER, Siegfried, 92130 Issy-les-Moulineaux (FR); MAY, Martin, 35576 CESSON-SEVIGNE (FR); ONNO, Stéphane, 35576 CESSON-SEVIGNE (FR); NEUMANN, Christoph, 35576 CESSON-SEVIGNE (FR)
(74) Representative: Huchet, Anne

(57) **Abstract**

A method is described including retrieving information about telephone calls to or from a first device and a second device based on a link between a telephone number of the first device and a telephone number of the second device, identifying telephone numbers most called by the first device and the second device and identifying telephone numbers that called the first device and the second device and building a list of at least one of a number of telephone numbers that a subscriber of the first device or the second device is likely to call and telephone numbers that are likely to be called by the first device or the second device and at least one of the link between the telephone number of the first device and the telephone number of the second device and the identified telephone numbers.

## Description

### FIELD

The proposed method and apparatus relates to the interoperation of multiple telecommunication devices through a home (residential) gateway to generate a single favorite contact list based on the call history of the multiple telecommunication devices.

### BACKGROUND

This section is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

Current smartphones (e.g., iOS10) implement a screen with the actions the user is most likely to perform next (e.g., "Siri suggestions"), and in particular the four most likely persons to call, based on last persons called or last emails exchanged. The current state of art of such "most likely next action" user interfaces (UIs) is limited to smartphones only, whereas many subscribers are still using also fixed line or digital enhanced cordless telecommunications (DECT) phones, and with the growth of the internet of things increasingly will be using connected devices in the home (sensors, cameras, ...) that will continue to be connected over a fixed access network gateway. DECT phones (telephones) are devices that can be used to communicate through conventional telephone lines without a cord connecting a base station with a handset. Also, in some cases, the current solutions for smartphone based "most likely buttons to press" solutions are proposing actions that are obviously not meaningful for the end user. As an example, when the end user is in his/her home, the system could know this and suggest that he/she call any of his/her family members that are also present in the home. Such knowledge is currently unavailable since smartphones do not communicate or interact with DECT phones or other devices such as tablets, computers (desktop, laptop, notebook) or other telecommunication devices.

### SUMMARY

The technical problem addressed by the proposed method and apparatus is to generate a unified favorite list of persons to be called for a fixed line (e.g. DECT), a mobile phone (cell phone, smartphone) and other telecommunication devices. This list should reflect the presence of other persons at home. Further, the list should reflect the habits a person has at home (e.g. contacts called), in contrast to the habits the person has out of home.

The proposed solution makes home gateways data aware and moves home gateways towards a more "service oriented offering".

A method is described including retrieving information about telephone calls to or from a first device and a second device based on a link between a telephone number of the first device and a telephone number of the second device and a network address for the first device and a network address of the second device, identifying telephone numbers most called by the first device and the second device and identifying telephone numbers that called the first device and the second device and building a list of at least one of a number of telephone numbers that a subscriber of the first device or the second device is likely to call and telephone numbers that are likely to be called by the first device or the second device and at least one of the link between the telephone number of the first device and the telephone number of the second device and the identified telephone numbers.

In another embodiment of the present invention devices that are connected to the home gateway or within an operating range of the home gateway are identified.

In another embodiment of the present invention devices that were connected to the home gateway or were in the operating range of the home gateway are identified.

In another embodiment of the present invention devices that have multiple telephone numbers associated with the devices are identified.

In another embodiment of the present invention the built list is filtered.

In another embodiment of the present invention sensor data from a connected home sensing device connected to the home gateway is retrieved and used in building or filtering the list.

In another embodiment of the present invention the filtered list is ordered.

In another embodiment of the present invention the ordered filtered list is presented.

In another embodiment of the present invention the collected information and ordered filtered list are forwarded to a central server.

In an embodiment a device includes one or more processors operable to retrieve information about telephone calls to or from a first device and a second device based on a link between a telephone number of the first device and a telephone number of the second device, identify telephone numbers most frequently called by the first device and the second device and identifying telephone numbers that most frequently called the first device and the second device; and build a list of at least one of a number of telephone numbers that a user of the first device or the second device is likely to call and telephone numbers that are likely to call the first device or the second device and at least one of the link between the telephone number of the first device and the telephone number of the second device and the identified telephone numbers.

In an embodiment, the processor in the device is further operable to identify devices that are connected to the home gateway or within an operating range of the home gateway based on a network address for the first device and a network address for the second device.

In an embodiment, the processor in the device is further operable to identify devices that were connected to the home gateway or were in the operating range of the home gateway within a recent time period.

In an embodiment, the processor in the device is further operable to identify devices that have multiple telephone numbers associated with the devices.

In an embodiment, the processor in the device is further operable to filter the built list.

In an embodiment, the processor in the device is further operable to retrieve sensor data from a connected home sensing device connected to the home gateway and using the retrieved sensor data in building or filtering the list.

In an embodiment, the processor in the device is further operable to order the filtered list.

In an embodiment, the user interface and display and interface and display driver are operable to present the ordered filtered list to said user.

In an embodiment, the communications interface is operable to forward the collected information and ordered filtered list to a central server.

### BRIEF DESCRIPTION OF THE DRAWINGS

The proposed method and apparatus is best understood from the following detailed description when read in conjunction with the accompanying drawings. The drawings include the following figures briefly described below:

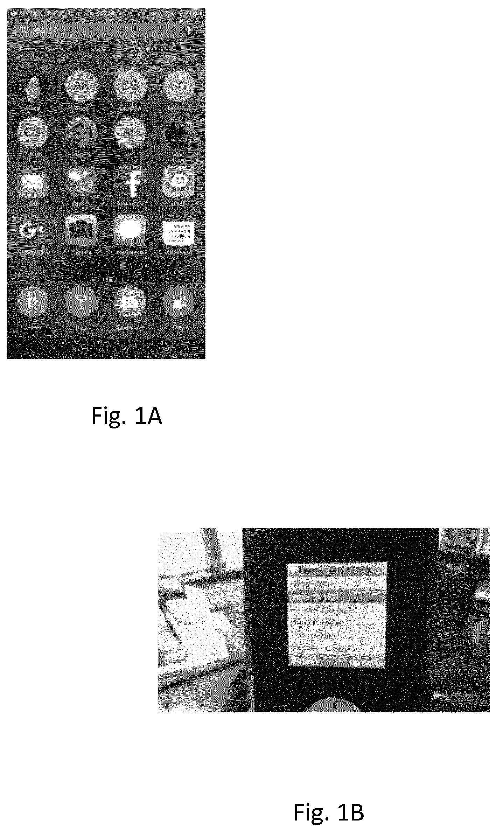

Fig. 1A is an example of a screen showing "Siri" suggestions for further subscriber actions.
Fig. 1B is an example of a screen of a conventional cordless digital telephone.
Fig. 2A and Fig. 2B together are a flowchart of the operation of an exemplary embodiment of the proposed solution.
Fig. 3 is a block diagram of an exemplary home gateway.

It should be understood that the drawing(s) are for purposes of illustrating the concepts of the disclosure and is not necessarily the only possible configuration for illustrating the disclosure.

### DETAILED DESCRIPTION

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

The called phone numbers can be captured in several ways. In case the home gateway has an embedded DECT base station, the number is easy to extract from the DECT software stack whenever a call is established. Alternatively, the home gateway can run a Session Initiation Protocol (SIP) Back-to-back User Agent (B2BUA) as specified in https://tools.ietf.org/html/rfc3261. If such a B2BUA is implemented, it is straightforward to extract all call log data. This is the typical implementation/state of the art for VoIP services in fixed residential broadband gateways. In yet another alternative, the home gateway can perform deep packet inspection (DPI) on all SIP messages that are routed through it, and manually extract the header information. This solution can potentially also allow the capture of calls from mobile devices connected over WiFi and making SIP calls. In a variant, the home gateway also generates a list of "most called when at home" and "most called by when at home" phone numbers. These lists can be determined by selecting only the calls in the respective call logs at times where the mobile device was connected or within the operating range of the home network.

Based on the previously collected information, the home gateway (or alternatively the mobile device after having retrieved the above information) builds a list of *n* most likely to call phone numbers. This list includes the number of devices at home who left within the last x hours. The list presents the intersection or union of fixed and mobile device favorite list of "most called" (or "most called when at home") numbers. The list is filtered, meaning that mobile phones that are currently within the vicinity (connected or within operating range of the home network) of the gateway will not be presented to the user (subscriber). Filtering could also take into account a subscriber's "preferred list" of incoming caller numbers as well. The home gateway can block incoming calls that are not on the subscriber's "preferred list" when a sensor indicates that the person (e.g., elderly person) is in bed. The "preferred list" can be updated automatically or by the subscriber.

Similarly, the home gateway also builds a list of *n* phone numbers most likely to be called by. This list includes the number of devices at home who left within the last x hours. The list includes numbers of fixed and mobile device favorite list of "most called by" " (or "most called by when at home") numbers. The list is filtered, meaning that mobile phones that are currently within the vicinity (connected or within the operating range of the home network) of the home gateway will not be presented to the user (subscriber). Filtering could also take into account a subscriber's "preferred list" of incoming caller numbers as well. The home gateway can block incoming calls that are not on the subscriber's "preferred list" when a sensor indicates that the person (e.g., elderly person) is in bed. The "preferred list" can be updated automatically or by the subscriber. The order of this list is improved by the home gateway depending on the optional sensor data it manages, i.e. if the home gateway is aware of presence in the bedroom or in the kitchen, the list of most likely numbers to be called will be determined based on past calling activity when the same sensor states were valid.

The home gateway also provides an API for these lists to allow building a mobile device (e.g., smartphone, tablet etc.) application that retrieves the lists and presents them on the mobile device. DECT phones and/or the mobile devices display these lists when a user (subscriber) wants to place a call. The end user application can be a UI presenting only few buttons with the most likely persons to call, this could either replace current "favorites" buttons on phone sets, or it could be integrated into mobile device assistants such as "Siri" or "Google Now" to make them "home aware".

The DECT solution in the gateway builds a UI on a specially configured DECT handset to present the short list of most likely numbers on the DECT phone. For example, a DECT phone for small kids or elderly people can be designed that builds a UI supporting calls to only the most relevant help (e.g." 911) by pressing one single button.

With the proposed solution, a mobile device that is not currently at home, will offer a different favorite phone list than when at home.

In an alternative embodiment of the proposed solution, the home gateway sends the collected information and/or the determined lists to a central server. The central server collects this data from a larger set of home gateways, allowing the aggregation of the information of several users (subscribers). This, in particular, allows the central server to build a graph representing the people who meet each other frequently in real life or call each other frequently on the phone.

While the proposed solution has a number of positive uses including making it easier to make a call to a most recently (favorite) called contact, keeping track of who minors are in contact with from the standpoint of limiting minors use of their mobile telecommunications devices but also keeping minors safe from cyber predators. However, given privacy management is typically an important issue when it comes to social network communications, the proposed solution includes also a mechanism to selectively decide which communications should be used as sources for the proposed solution and which communications should not be used. In a similar manner as how social networks (e.g., Facebook, Google etc.) allow the subscriber to control how others can see a certain type of posting, the proposed solution in the home (residential) gateway can be configured in a way to decide that certain information is or can be filtered for privacy reasons. In the proposed solution, it is possible to configure the system so that all communication from a given terminal should not be taken into account for building the favorite contact (call) list. It is also possible to dial a prefix (e.g. #2) before a phone number, or press a specific button on the terminal/phone handset/VOIP application, in order to filter the number used on a specific call (e.g. if a person does not want anybody else to know that he/she has called a specific number). In this case, an API in the proposed solution will also allow automatic masking of the called number ID from the detailed call records sent potentially together with the phone bill. This may necessitate coordination with the telecommunication operator's operations support system (OSS)/ business support system (BSS) system. The BSS is a telecommunications system's billing system. Within the BSS are there are a number of software applications, a first one that gathers (millions of) so called "CDR" (call detail records), then others that apply rating and other algorithms to the CDRs, yet others apply fraud management, and finally there is an application to build a phone bill for the end user. Such phone bills can include the detail of all called numbers. Since privacy may be an issue, certain telephone numbers should be masked in the phone bill. Given that the BSS still "knows" about the numbers (the BSS needs them to determine and apply applicable tariffs/rates), the telephone numbers that are private need to be properly integrated with the billing system in order to mask them. It is possible to configure the proposed solution in a way that certain phone numbers are excluded from building the favorite (recent) contact (call) list. It is also possible to protect access to the contact list completely and keep the whole social graph that is built confidential to the operator. In this case, the data for the social graph is preferably stored in a database operated by a telecommunication network operator, for example it could be stored in a network virtual function (NFV) of a "Virtual CPE" deployment running in the telecommunications network operator's infrastructure.

A residential (home) gateway can support several external phone numbers/phone lines. In some use cases, it can be imagined that one of these secondary telephone numbers is used for specific applications (a fax line, or a number to call a specific person in the family, or a home office number). In such deployments, the proposed solution can be configured in several ways, such as
the proposed solution can build a specific social graph and "contact list" for each of the telephone lines
2) or the proposed solution can aggregate the information from all telephone lines
3) alternatively, the proposed solution can specifically be configured so that certain telephone lines or client terminals (devices, mobile devices) are excluded from the graph and/or all calls from these devices are marked 'privacy' by default.

In the case of a subscriber having a mobile device for which they have paid for "line2" service. "Line2" service is the addition of a second telephone number on a single device, such as a cell (mobile) telephone (device). "Line2" operates over WiFi, data and cell networks. In this case, the proposed solution can be configured to filter calls to/from the second telephone number. This can be accomplished using a WiFi network address or using the mobile device's international mobile station equipment identity (IMEI) number. The IMEI number can be used to identify mobile phones as well as some satellite phones.

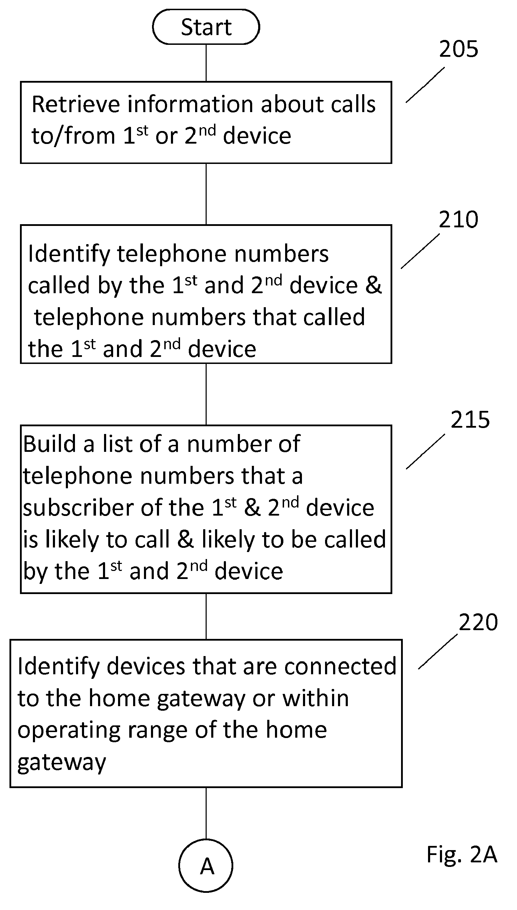

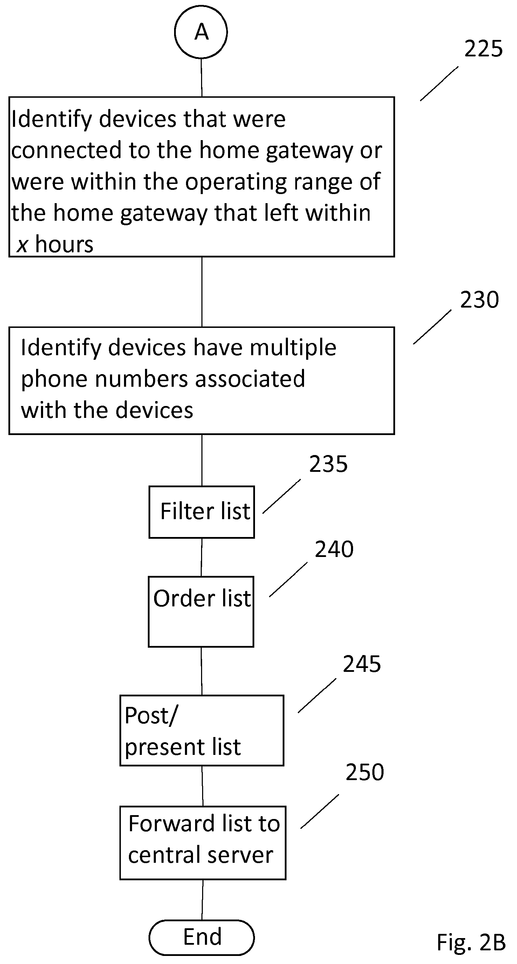

Fig. 2A and Fig. 2B together are a flowchart of the operation of an exemplary embodiment of the proposed solution. At 205 the home (residential) gateway retrieves information about telephone calls to or from a first device (DECT telephone, cell phone, mobile device) and a second device (DECT telephone, cell phone, mobile device) based on a link between a telephone number of the first device and a telephone number of the second device and a network address for the first device and a network address of the second device. At 210 the home gateway identifies telephone numbers most called by the first device and the second device and identifies telephone numbers that called the first device and the second device.

The home gateway maintains a log (file) of received and emitted phone calls of the DECT phones connected to the home gateway. The home gateway may also retrieve the call log (file) of received and emitted phone calls of a mobile device connected to the home network and the (favorite) contact list of the mobile device. For each of the call logs (files), the home gateway determines the list of "most called" and "most called by" phone numbers. The called phone numbers can be captured in several ways. In case the home gateway has an embedded DECT base station, the number is easy to extract from the DECT software stack whenever a call is established. Alternatively, the home gateway can run a Session Initiation Protocol (SIP) Back-to-back User Agent (B2BUA) as specified in https://tools.ietf.org/html/rfc3261. If such a B2BUA is implemented, it is straightforward to
other frequently in real life or call each other frequently on the phone. It is also possible to keep the whole social graph that is built confidential to the operator. In this case, the data for the social graph is preferably stored in a database operated by a telecommunication network operator, for example it could be stored in a NFV of a "Virtual CPE" deployment running in the telecommunications network operator's infrastructure. The proposed solution will help Telcos to take back the control of the "social graph" which currently is mainly managed by companies such as Google or Facebook. Other applications of the collected information and determined list built within the home gateway could be telemarketing, e.g., the Telco operator could resell the knowledge the operator has about what is going on inside the home to marketing companies such as Criteo, Google, or Facebook.

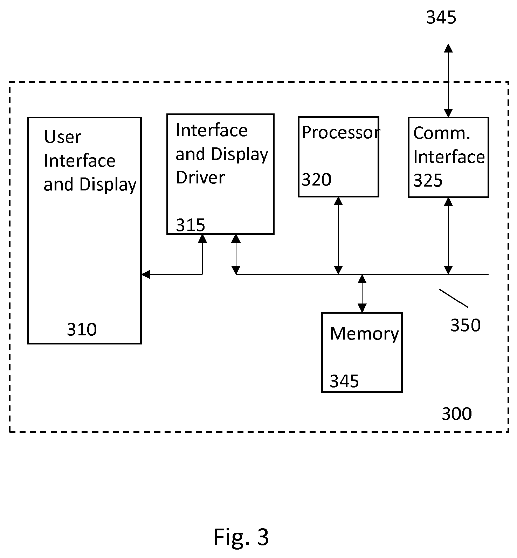

Fig. 3 is an example block diagram of an exemplary home gateway (access point, router-modem combination) 300. The block diagram configuration includes a bus-oriented 350 configuration interconnecting a processor 320, and a memory 345. The configuration of Fig. 3 also includes a communication interface 325. The communications interface 325 may be wired or wireless and may in fact, include two interfaces - one for wired line communication and one for wireless communication.

Processor 320 provides computation functions for the home gateway, such as those depicted in Figs. 2A and 2B as well as conventional home gateway functionality. Processor 320 also includes any APIs necessary to perform the functions depicted in Figs. 2A and 2B described above. The processor 320 can be any form of CPU or controller that utilizes communications between elements of the home gateway to control communication and computation processes. Those of skill in the art recognize that bus 350 provides a communication path between the various elements of embodiment 300 and that other point-to-point interconnection options (e.g. non-bus architecture) are also feasible.

User interface and display 310 is driven by interface circuit 315. The interface 310 is used to present (post) the determined list.

Memory 345 can act as a repository for memory related to any of the methods that incorporate the functionality of the home gateway. Memory 345 can provide the repository for storage of information such as program memory, downloads, uploads, or scratchpad calculations etc. Those of skill in the art will recognize that memory 345 may be incorporated all or in part of processor 320. Communications interface 325 has both receiver and transmitter elements for communication as known to those of skill in the art. Program instructions for operation of the processor of the home gateway may be in memory 345 or may be in processor.

It is to be understood that the proposed method and apparatus may be implemented in various forms of hardware, software, firmware, special purpose processors, or a combination thereof. Special purpose processors may include application specific integrated circuits (ASICs), reduced instruction set computers (RISCs) and/or field programmable gate arrays (FPGAs). Preferably, the proposed method and apparatus is implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

It is to be further understood that, because some of the constituent system components and method steps depicted in the accompanying figures are preferably implemented in software, the actual connections between the system components (or the process steps) may differ depending upon the manner in which the proposed method and apparatus is programmed. Given the teachings herein, one of ordinary skill in the related art will be able to contemplate these and similar implementations or configurations of the proposed method and apparatus.

For purposes of this application and the claims, using the exemplary phrase "at least one of A, B and C," the phrase means "only A, or only B, or only C, or any combination of A, B and C."

## Claims

1. A method, said method comprising:
retrieving (205) information about telephone calls to or from a first device and a second device based on a link between a telephone number of said first device and a telephone number of said second device;
identifying (210) telephone numbers most frequently called by said first device and said second device and identifying telephone numbers that most frequently called said first device and said second device; and
building (215) a list of at least one of a number of telephone numbers that a user of said first device or said second device is likely to call and telephone numbers that are likely to call said first device or said second device and at least one of said link between said telephone number of said first device and said telephone number of said second device and said identified telephone numbers.

2. The method according to claim 1, further comprising identifying (220) devices that are connected to the home gateway or within an operating range of the home gateway based on a network address for said first device and a network address for said second device.

3. The method according to claims 1 or 2, further comprising identifying (225) devices that were connected to the home gateway or were in the operating range of the home gateway within a recent time period.

4. The method according to any of the preceding claims, further comprising identifying (230) devices that have multiple telephone numbers associated with the devices.

5. The method according to any of the preceding claims, further comprising filtering (235) the built list.

6. The method according to any of the preceding claims, further comprising retrieving (235) sensor data from a connected home sensing device connected to the home gateway and using said retrieved sensor data in building or filtering said list.

7. The method according to claim 5, further comprising ordering (240) the filtered list.

8. The method according to claim 7, further comprising presenting (245) the ordered filtered list to said user.

9. The method according to any of claims 7 or 8, further comprising forwarding (250) the collected information and ordered filtered list to a central server.

10. A device comprising one or more processors (320) operable to:
retrieve (205) information about telephone calls to or from a first device and a second device based on a link between a telephone number of said first device and a telephone number of said second device;
identify (210) telephone numbers most frequently called by said first device and said second device and identifying telephone numbers that most frequently called said first device and said second device; and
build (215) a list of at least one of a number of telephone numbers that a user of said first device or said second device is likely to call and telephone numbers that are likely to call said first device or said second device and at least one of said link between said telephone number of said first device and said telephone number of said second device and said identified telephone numbers.

11. The device according to claim 10, wherein said processor is further operable to identify (220) devices that are connected to the home gateway or within an operating range of the home gateway based on a network address for said first device and a network address for said second device.

12. The device according to claims 10 or 11, wherein said processor is further operable to identify (225) devices that were connected to the home gateway or were in the operating range of the home gateway within a recent time period.

13. The device according to any of claims 10 to 12, wherein said processor is further operable to identify (230) devices that have multiple telephone numbers associated with the devices.

14. The device according to any of claims 10 to 13, wherein said processor is further operable to filter (235) the built list.

15. The device according to any of claims 10 to 14, wherein said processor is further operable to retrieve (235) sensor data from a connected home sensing device connected to the home gateway and using said retrieved sensor data in building or filtering said list.
